# EUROPÄISCHE PATENTANMELDUNG

(11) **EP 4 789 522 A1**
(43) Veröffentlichungstag der Anmeldung: **12.08.2026**
(21) Anmeldenummer: 26151985.4
(22) Anmeldetag: 15.01.2026
(51) Int. Cl.: A01B 69/04, A01D 75/18, A01D 75/20, G05D 1/00

(54) **ASSISTENZSYSTEM ZUR ANSTEUERUNG EINES AUTONOMEN LANDWIRTSCHAFTLICHEN GESPANNS**

(30) Priorität: 11.02.2025 DE 102025105010
(71) Anmelder: CLAAS Saulgau GmbH, 88340 Bad Saulgau (DE)
(72) Erfinder: Rupp, Magnus, 73494 Rosenberg (DE); Mock, Andreas, 88284 Wolpertswende (DE); Fischer, Josef, 88400 Biberach (DE); Speer, Christian, 78267 Aach (DE); Monkenbusch, Robin, 33378 Rheda-Wiedenbrück (DE); Schmitt, Mathias, 78576 Emmingen-Liptingen (DE); Spieler, Raphael, 88339 Bad Waldsee (DE); Frick, Clemens, 88356 Ostrach (DE)
(74) Vertreter: CLAAS Gruppe

(57) **Zusammenfassung**

Die vorliegende Erfindung betrifft ein Assistenzsystem (1) zur Ansteuerung eines autonomen landwirtschaftlichen Gespanns (2A, 2B) mit einem autonomen Arbeitsfahrzeug (3) und zumindest einem daran adaptierten Anbaugerät (4) zur Durchführung einer landwirtschaftlichen Arbeitsaufgabe, wobei das Gespann (2A, 2B) zumindest eine Sensoranordnung (16) zur Generierung von Umfelddaten (17) innerhalb einer durch das Assistenzsystem (1) zu definierenden, das Gespann (2A, 2B) umgebenden Sicherheitszone (SZA, SZB) umfasst, wobei das Assistenzsystem (1) zum Empfang und zur Auswertung der von der zumindest einer Sensoranordnung (16) bereitgestellten Umfelddaten (17) eingerichtet ist, wobei das Assistenzsystem (1) dazu ausgeführt und eingerichtet ist, Informationen zur auszuführenden landwirtschaftlichen Arbeitsaufgabe und/oder Informationen zum zumindest einen zur Durchführung der landwirtschaftlichen Arbeitsaufgabe vorgesehenen Anbaugerät (4) aus zumindest einer Datenquelle (18) abzurufen, um in Abhängigkeit von diesen Informationen die Sicherheitszone (SZA, SZB) individuell zu definieren, innerhalb welcher das Assistenzsystem (1) bei einer Detektion eines Objektes durch die Auswertung der Umfelddaten (17) eine Reaktionsroutine auslöst.

## Beschreibung

Die vorliegende Erfindung betrifft ein Assistenzsystem zur Ansteuerung eines autonomen landwirtschaftlichen Gespanns gemäß dem Oberbegriff des Anspruches 1. Weiterhin ist ein autonomes Gespann gemäß dem Oberbegriff des Anspruches 15 Gegenstand der vorliegenden Erfindung.

Aus der WO 2023/078863 A1 ist ein autonomer Traktor bekannt, welcher eine landwirtschaftliche Maschine zur Durchführung einer landwirtschaftlichen Arbeitsaufgabe auf einem Feld zieht. Der Traktor weist eine Steuereinheit auf, welche die Bearbeitung des Feldes anhand eines Bearbeitungsplans steuert und dabei einen Standard-Sicherheitsmodus vorgibt, der eine oder mehrere Standardzonen um den Traktor herum definiert. Betritt eine Person eine der definierten Standardzonen, wechselt die Steuereinheit den Betriebsmodus des Traktors vom Bearbeitungsplan in einen Sicherheitsplan. Die Steuereinheit definiert zusätzlich blaue Zonen um den Traktor, welche sich mit den Standardzonen überlappen. Befindet sich eine Bedienperson in einer der blauen Zonen um den Traktor, steuert die Steuereinheit den Traktor abweichend vom Sicherheitsplan weiterhin entsprechend dem Bearbeitungsplan an.

Bei der Bestimmung der Ausdehnung und Position der einen oder mehreren Standardzonen sowie der blauen Zonen um den Traktor bildet der autonome Traktor die Ausgangsbasis. Weitere Einflüsse auf die Bestimmung der Standardzonen sowie der blauen Zonen, die sich aus dem Betrieb des Traktors und der gezogenen landwirtschaftlichen Maschine zur Durchführung der landwirtschaftlichen Arbeitsaufgabe gemäß dem Bearbeitungsplan ergeben, bleiben unberücksichtigt.

Ausgehend vom vorstehend genannten Stand der Technik liegt der Erfindung die Aufgabe zugrunde, ein Assistenzsystem zur Ansteuerung eines autonomen landwirtschaftlichen Gespanns bereitzustellen, welches zusätzliche Randbedingungen bei der das Gespann umgebenden Sicherheitszone zur autonomen Durchführung der landwirtschaftlichen Arbeitsaufgabe berücksichtigt.

Diese Aufgabe wird durch ein Assistenzsystem mit den Merkmalen des unabhängigen Anspruches 1 sowie ein autonomes Gespann mit den Merkmalen des Anspruches 15 gelöst. Vorteilhafte Weiterbildungen sind Gegenstand der Unteransprüche.

Gemäß dem Anspruch 1 wird ein Assistenzsystem zur Ansteuerung eines autonomen landwirtschaftlichen Gespanns mit einem autonomen Arbeitsfahrzeug und zumindest einem daran adaptierten Anbaugerät zur Durchführung einer landwirtschaftlichen Arbeitsaufgabe vorgeschlagen. Das Gespann umfasst zumindest eine Sensoranordnung zur Generierung von Umfelddaten innerhalb einer durch das Assistenzsystem zu definierenden, das Gespann umgebenden Sicherheitszone, wobei das Assistenzsystem zum Empfang und zur Auswertung der von der zumindest einer Sensoranordnung bereitgestellten Umfelddaten eingerichtet ist. Erfindungsgemäß ist vorgesehen, dass das Assistenzsystem dazu ausgeführt und eingerichtet ist, Informationen zur auszuführenden landwirtschaftlichen Arbeitsaufgabe und/oder Informationen zum zumindest einen zur Durchführung der landwirtschaftlichen Arbeitsaufgabe vorgesehenen Anbaugerät aus zumindest einer Datenquelle abzurufen, um in Abhängigkeit von diesen Informationen die Sicherheitszone individuell zu definieren, innerhalb welcher das Assistenzsystem bei einer Detektion eines Objektes mittels Auswertung der Umfelddaten eine Reaktionsroutine auslöst.

Dem liegt die Überlegung zugrunde, dass die durchzuführende landwirtschaftliche Arbeitsaufgabe sowie das hierfür verwendete zumindest eine Anbaugerät Einfluss auf die durch das Assistenzsystem zu definierende Sicherheitszone sowie die zumindest eine auszulösende Reaktionsroutine haben, wenn ein Objekt in der Sicherheitszone aufgrund der Auswertung der von der zumindest einen Sensoranordnung bereitgestellten Umfelddaten detektiert wird. Das erfindungsgemäße Assistenzsystem definiert in Abhängigkeit von der durchzuführenden landwirtschaftlichen Arbeitsaufgabe und/oder dem zumindest einen hierfür vorgesehenen Anbaugerät individuell die Lage, Ausdehnung und Kontur der Sicherheitszone um das autonome Gespann und die zumindest eine auszulösende Reaktionsroutine.

Insbesondere kann das Assistenzsystem dazu eingerichtet sein, das detektierte Objekt als statisches oder dynamisches Objekt und/oder als lebendes oder nichtlebendes Objekt einzuordnen. Als ein statisches Objekt wird ein Objekt erkannt, welches ohne eigenen Zutun durch die Fortbewegung des Gespanns in die Sicherheitszone gelang. Ein dynamisches Objekt bewegt sich hingegen selbsttätig auf dem Feld und kann somit selbsttätig in die Sicherheitszone des Gespanns gelangen. Die alternative oder zusätzliche Differenzierung zwischen einem lebenden oder einem nichtlebenden Objekt, welches als statisches oder als dynamisches Objekt eingeordnet wurde, ermöglicht es dem Assistenzsystem abzuleiten, wie auf das detektierte Objekt reagiert werden soll, d.h. welche Reaktionsroutine auszulösen ist.

Bevorzugt kann das Assistenzsystem zur Hinterlegung und zur Durchführung von wenigstens einem Objekterkennungs- und Reaktionsalgorithmus eingerichtet sein, um das detektierte Objekt zu identifizieren, zu klassifizieren und darauf zu reagieren. Der Objekterkennungs- und Reaktionsalgorithmus kann bevorzugt auf künstlicher Intelligenz basieren. Das Assistenzsystem kann hierzu ein Maschinenlernmodell verwenden. Bei dem Maschinenlernmodell kann es sich beispielsweise um ein trainiertes künstliches neuronales Netz handeln. Auch andere trainierbare Architekturen sind gleichermaßen als Maschinenlernmodell vorstellbar. Der Objekterkennungsalgorithmus ist dazu eingerichtet, Objekte innerhalb der Sicherheitszone zu erkennen. Der Objekterkennungsalgorithmus umfasst zumindest einen Klassifikationsschritt, um zwischen einem statischen und einem dynamischen Objekt und/oder einem lebenden oder nichtlebenden Objekt zu unterscheiden. Der Objekterkennungsalgorithmus kann durch die Klassifizierung auch die räumliche Dimension eines Objektes bestimmen. Letzteres kann insbesondere bei statischen, nichtlebenden Objekten relevant sein, wenn diese Objekte aufgrund ihrer Größe das Auslösen einer Reaktionsroutine entbehrlich machen. Der Reaktionsalgorithmus leitet entsprechend der Klassifizierung die auszulösende Reaktionsroutine ab, die wiederum unterschiedliche Reaktionen umfassen kann.

Gemäß einer Weiterbildung kann das Assistenzsystem dazu eingerichtet sein, die Sicherheitszone in Abhängigkeit von den Informationen in zumindest drei Unterzonen mit variabler Größe, einer inneren Zone, wenigstens einer die innere Zone umgebenden Zwischenzone und einer die wenigstens eine Zwischenzone umgebenden äußeren Zone, zu unterteilen. Die Unterteilung in die zumindest drei Unterzonen kann dazu dienen, unabhängig von der Art des detektierten Objektes, ob als statisches oder dynamisches Objekt und/oder als lebendes oder nichtlebendes Objekt, die Ausführung einer für die jeweilige Unterzone spezifischen Reaktionsroutine zu priorisieren.

Bevorzugt kann der jeweiligen Unterzone eine individuelle Reaktionsroutine zugeordnet sein, wobei die Detektion eines Objekts in der das Gespann unmittelbar umschließenden inneren Zone eine kritische Betriebssituation bildet, die Detektion eines Objekts in der wenigstens einen Zwischenzone eine Grenzbetriebssituation bildet und die Detektion eines Objektes in der äußeren Zone eine unkritische Betriebssituation bildet.

Insbesondere kann die der jeweiligen Unterzone zugeordnete Reaktionsroutine unterschiedliche, in ihrer Intensität abgestufte Reaktionen zur Ansteuerung des Gespanns umfassen, mit welcher das Assistenzsystem auf das Auftreten des Objekts in der jeweiligen Unterzone der Sicherheitszone reagiert.

So kann bei einem in der inneren Zone detektierten Objekt die Reaktionsroutine das sofortige Unterbrechen einer Fahrbewegung des autonomen Gespanns umfassen. Zusätzlich kann die Reaktionsroutine das Abschalten des Antriebs und/oder die Unterbrechung des Antriebsstranges für das zumindest eine adaptierte Anbaugerät umfassen.

Bei einer Detektion eines Objektes in der wenigstens einen Zwischenzone, welche zu einer Grenzbetriebssituation führt, ist die Differenzierung der Art des detektierten Objektes eine wesentliche Prämisse für die auszulösende Reaktionsroutine. Die Einordung des detektierten Objekts als statisches oder dynamisches Objekt und/oder als lebendes oder nichtlebendes Objekt kann unterschiedliche Reaktionsroutinen auslösen. Die auszuführende Maßnahme orientiert sich zunächst daran, ob es sich um ein lebendes oder nichtlebendes Objekt handelt. Als weiterer Schritt erfolgt die Differenzierung zwischen einem statischen und einem dynamischen Objekt. So kann die Reaktionsroutine beispielsweise eine Reduzierung der Fahrgeschwindigkeit des autonomen Gespanns, eine partielle Anpassung der Fahrspur und/oder das Auslösen von akustischen und/oder optischen Warnhinweisen umfassen.

Hingegen kann die Detektion eines Objektes in der äußeren Zone, welche eine unkritische Betriebssituation bildet, eine Reaktionsroutine auslösen, welche den Betriebsablauf des autonomen Gespanns unbeeinflusst lässt, jedoch das Ereignis als solches sowie die Art und die Position des detektierten Objekts georeferenziert aufzeichnet.

Bevorzugt kann das Assistenzsystem dazu eingerichtet sein, aus einer Datenquelle feldspezifische Daten über das zu bearbeitenden Feld abzurufen, welche Art und Position von bereits kategorisierten Hindernissen auf dem Feld enthalten. Bevorzugt kann es sich bei der Datenquelle, die feldspezifische Daten über das zu bearbeitenden Feld bereitstellt, um ein Farmmanagementsystem handeln, in welchem unter anderem topgrafische Daten des zu bearbeitenden Feldes hinterlegt sind.

Gemäß einer bevorzugten Weiterbildung kann das Assistenzsystem dazu eingerichtet sein, mittels einer Kommunikationseinheit die Informationen zu der durch das autonome Gespann auszuführenden landwirtschaftlichen Arbeitsaufgabe und/oder zum zumindest einen zur Durchführung der landwirtschaftlichen Arbeitsaufgabe vorgesehenen Anbaugerät durch einen interaktiven Dialog mit einer Bedienperson des Gespanns als Datenquelle abzufragen, aus einem Speicher einer entfernten Datenverarbeitungsvorrichtung als Datenquelle abzurufen und/oder bei Adaption des zumindest einen Anbaugerätes an das Arbeitsfahrzeug durch einen Datenbus von einer Steuereinheit des autonomen Arbeitsfahrzeuges oder des Anbaugerätes als Datenquelle abzurufen. Bei der entfernten Datenverarbeitungsvorrichtung als Datenquelle kann es sich bevorzugt ebenfalls um das Farmmanagementsystem handeln, welches feldspezifische Daten in einer Datenbank als Speicher bereitstellt.

Bevorzugt kann das Assistenzsystem dazu eingerichtet sein, die Definition der Sicherheitszone in Abhängigkeit von der Anzahl der an das Arbeitsfahrzeug adaptierten Anbaugeräte, der Art des zumindest einen Anbaugerätes, den Abmessungen des zumindest einen Anbaugerätes und/oder dem Betriebsbereich in Arbeitsposition des zumindest einen Anbaugerätes durchzuführen.

Beispielhaft für die variierende Anzahl der an das Arbeitsfahrzeug adaptierten Anbaugeräte kann auf Mähwerke verwiesen werden, welche als Frontmähwerk und zumindest ein Heckmähwerk ausgeführt sein können. Das zumindest eine Heckmähwerk kann als ein seitenaufgehängtes Mähwerk oder als mittig aufgehängtes Schmetterlingsmähwerk ausgeführt sein. Ein weiteres Beispiel bildet die Anordnung eines Saatgutbehälters als Anbaugerät im Frontbereich des autonomen Arbeitsfahrzeugs und einer durch Zuleitungen mit dem Saatgutbehälter verbundenen Sämaschine als weiteres Anbaugerät im Heckbereich.

Als Beispiel für einen variierenden Betriebsbereich in Arbeitsposition des Anbaugerätes kann beispielweise auf Feldspritzen verwiesen werden. Diese weisen in der Regel eine große Arbeitsbreite auf. Die Arbeitsbreite lässt sich durch eine Teilbreitenschaltung oder durch Einzeldüsenabschaltung verändern, insbesondere abschnittsweise reduzieren, wenn im Bereich von Feldaußengrenzen Spritzmittel ausgebracht werden. Zudem kann der Betriebsbereich in Arbeitsposition des Anbaugerätes variabel sein, beispielsweise durch eine dynamische Veränderbarkeit der Arbeitsbreite. Beispielhaft hierfür wird wieder auf das Mähwerk verwiesen, welches teleskopierbare Mähausleger aufweisen kann. Ein weiteres Beispiel ist ein Schwader, welcher an teleskopierbaren Auslegern angeordnete Schwadkreisel aufweisen kann. Hierdurch kann beispielsweise auf Engstellen oder bei Kurvenfahrten auf einem Feld reagiert werden. Auch diese Veränderung kann von dem Assistenzsystem bei der Definition der individuellen Sicherheitszone berücksichtigt werden.

Weiterhin kann als Beispiel für einen variierenden Betriebsbereich ein Anbaudrehpflug genannt werden, welcher entsprechend der Fahrtrichtung des autonomen Gespanns auf dem zu bearbeitenden Feld beim Durchfahren des Vorgewendes um seine Längsachse gedreht wird.

Des Weiteren kann das Assistenzsystem dazu eingerichtet sein, die Form der Sicherheitszone in Abhängigkeit von der Einnahme der Arbeitsposition oder einer Transportposition des zumindest einen Anbaugerätes zu verändern. So können Anbaugeräte, deren Arbeitsbreite die für die Straßenfahrt zulässige Breite beim Transport überschreiten, teleskopierbar, klappbar oder faltbar ausgeführt sein. Diese Funktionalität kann auch bei Anbaugeräten zur Anwendung kommen, deren Arbeitsbreite geringer als die für die Straßenfahrt zulässige Breite ist. Die Funktionalität des Teleskopierens, Klappens oder Faltens zur Einnahme der Transportposition kann beim Bewegen des Gespanns auf dem Feld genutzt werden, wodurch sich die Arbeitsbreite bedarfsabhängig reduzieren lässt.

Gemäß einer bevorzugten Weiterbildung kann das Assistenzsystem dazu eingerichtet sein, die Definition der Sicherheitszone in Abhängigkeit vom Vorhandensein statisch und/oder dynamisch arbeitender Arbeitsorgane des zumindest einen Anbaugerätes durchzuführen. Als Beispiel für ein statische Arbeitsorgane aufweisendes Anbaugerät kann wieder der Pflug genannt werden, welcher über keine aktiv angetriebenen Komponenten zur Durchführung der landwirtschaftlichen Arbeitsaufgabe, das Pflügen, verfügt, so dass sich der Einfluss auf die Umgebung auf den unmittelbaren Arbeitsbereich beschränkt. Vergleichbares gilt für Sämaschinen, die keine über ihren unmittelbaren Arbeitsbereich hinausgehend die Umgebung beeinflussende Arbeitsaggregate umfassen. Der unmittelbare Arbeitsbereich ist durch die Erstreckung des zumindest einen Anbaugerätes in Querrichtung und Längsrichtung bestimmt.

Ein dynamische Arbeitsorgane aufweisendes Anbaugerät ist beispielsweise ein Schwader oder ein Mähwerk. Die Arbeitsorgane des Schwaders sind rotierende Rechkreisel mit daran angeordneten Zinkenträgen und Zinken. Die dynamischen Arbeitsorgane des Mähwerks sind rotierende Mähscheiben mit daran angeordneten Messern. Die rotierend angetriebenen Arbeitsorgane können Fremdkörper wie Steine aus dem unmittelbaren Arbeitsbereich des Anbaugerätes hinausbefördern, so dass diese für lebende Objekte zur Gefahr werden können, die sich seitlich von oder hinter dem Anbaugerät aufhalten. Entsprechend wird die Definition der Sicherheitszone in Abhängigkeit vom Vorhandensein statisch und/oder dynamisch arbeitender Arbeitsorgane des zumindest einen Anbaugerätes durchgeführt, um dieser Gefahr zu begegnen.

Insbesondere kann das Assistenzsystem dazu eingerichtet sein, das Entfernen des detektierten Objektes aus der Sicherheitszone zu bestimmen und die Durchführung der landwirtschaftlichen Arbeitsaufgabe mit vor der Auslösung der Reaktionsroutine gültigen Betriebsparametern fortzuführen. Das Entfernen des detektierten Objektes aus der Sicherheitszone umfasst das selbsttätige Verlassen der Sicherheitszone durch ein lebendes Objekt, die manuelle Entfernung eines nichtlebenden Objektes und/oder das angesteuerte Umfahren des Objektes in einem durch die Ausdehnung der Sicherheitszone bestimmten Abstand zum Objekt.

Bevorzugt kann die zumindest eine Sensoranordnung mehrere Sensoren umfassen, die an verschiedenen Positionen des autonomen Gespanns angeordnet sind. Die Anzahl und Verteilung der zumindest einen Sensoranordnung bzw. der Sensoren der zumindest eine Sensoranordnung auf das autonome Arbeitsfahrzeug und das zumindest eine daran adaptierte Anbaugerät kann sich bevorzugt an der auszuführenden landwirtschaftlichen Arbeitsaufgabe und/oder dem zumindest einen zur Durchführung der landwirtschaftlichen Arbeitsaufgabe vorgesehenen Anbaugerät orientieren. In Abhängigkeit von den Informationen zur auszuführenden landwirtschaftlichen Arbeitsaufgabe und/oder zu dem zumindest einen zur Durchführung der landwirtschaftlichen Arbeitsaufgabe vorgesehenen Anbaugerät wird die Sicherheitszone individuell definiert, wodurch sich die erforderliche Anzahl, Verteilung und Positionierung der Sensoren an dem autonomen Gespann ergeben kann, um die definierte Sicherheitszone sensorisch zu erfassen und zu überwachen.

Insbesondere können die Sensoren der zumindest eine Sensoranordnung als optische Sensoren, Ultraschallsensoren, RADAR-Sensoren, LIDAR-Sensoren und/oder Thermalsensoren ausgeführt sein. Bevorzugt kommt eine Kombination mehrerer unterschiedlicher Sensoren zur Anwendung, um unter unterschiedlichen Betriebs- und Witterungsbedingungen die Erfassung von und die Differenzierung zwischen innerhalb der dynamisch veränderbaren Sicherheitszone detektierten Objekten zu gewährleisten.

Weiterhin ist die Anordnung der Sensoren am Gespann derart gewählt, dass sich die Erfassungsbereiche benachbart angeordneter Sensoren abschnittsweise überlappen. Hierdurch lassen sich blinde Flecken oder tote Winkel in der Sicherheitszone vermeiden.

Die eingangs gestellte wird weiterhin durch ein autonomes Gespann mit den Merkmalen des Anspruches 15 gelöst.

Gemäß dem Anspruch 15 wird ein autonomes Gespann mit einem autonomen Arbeitsfahrzeug und zumindest einem daran adaptierten Anbaugerät zur Durchführung einer landwirtschaftlichen Arbeitsaufgabe vorgeschlagen, wobei das Gespann zumindest eine Sensoranordnung zur Generierung von Umfelddaten innerhalb einer das Gespann umgebenden Sicherheitszone umfasst, wobei dem Gespann ein Assistenzsystem zugeordnet ist, welches zur Definition der Sicherheitszone eingerichtet und ausgeführt ist, wobei das Assistenzsystem nach einem der vorangehenden Anspruch 1 bis 14 ausgebildet ist. Auf die erfindungsgemäßen Ausführungen zum Assistenzsystem darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch ein Feld, welches von zumindest einem autonomen landwirtschaftlichen Gespann bearbeitet wird;
- Fig. 2: schematisch und exemplarisch eine Darstellung eines Assistenzsystems zur Ansteuerung des zumindest einen autonomen landwirtschaftlichen Gespanns;
- Fig. 3: schematisch und exemplarisch das Assistenzsystem, welches von zumindest einer Datenquelle Informationen abruft;
- Fig. 4: schematisch und exemplarisch ein landwirtschaftliches Gespann gemäß Fig. 1 sowie eine für dieses Gespann individuell generierte Sicherheitszone; und
- Fig. 5: schematisch und exemplarisch ein weiteres landwirtschaftliches Gespann gemäß Fig. 1 sowie eine für dieses Gespann individuell generierte Sicherheitszone.

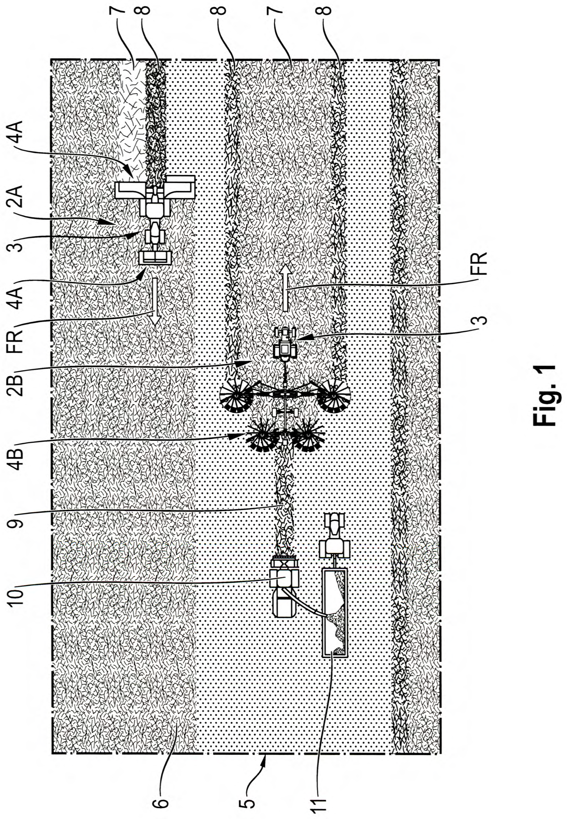

In Fig. 1 ist schematisch und exemplarisch ein Feld 5 dargestellt, welches von zumindest einem autonomen landwirtschaftlichen Gespann 2A, 2B bearbeitet wird. Das autonome Gespann 2A, 2B umfasst ein insbesondere als Traktor ausgestaltetes autonomes Arbeitsfahrzeug 3 und zumindest ein daran adaptiertes Anbaugerät 4A, 4B zur Durchführung einer landwirtschaftlichen Arbeitsaufgabe. Die Anbaugeräte 4A, 4B unterschieden sich hinsichtlich der durchzuführenden landwirtschaftlichen Arbeitsaufgabe.

Das autonome Gespann 2A weist als Anbaugeräte 4A ein frontseitig angeordnetes Mähwerk und ein heckseitig angeordnetes Mähwerk auf. Das autonome Gespann 2B weist als ein Anbaugerät 4B einen heckseitig angeordneten Kreiselschwader auf, hier ein Vierkreiselschwader.

Das sich in Fahrtrichtung FR bewegende autonome Gespann 2A mäht mit seinen Anbaugeräten 4A auf dem Feld 5 befindliches Erntegut 6, insbesondere Gras als Futtererntegut oder andere Feldfrüchte, welche gemäht werden können, als durchzuführende landwirtschaftlichen Arbeitsaufgabe ab. Lediglich beispielhaft ist vorgesehen, dass durch das autonome Gespann 2A ein Teil des zu mähenden Erntegutes 6 auf dem Feld 5 als gemähtes Erntegut 7 abgelegt und ein weiterer Teil bereits zu einem Schwad 8 zusammengeführt wird.

Das sich in Fahrtrichtung FR bewegende autonome Gespann 2B führt als landwirtschaftliche Arbeitsaufgabe die Erzeugung eines Schwads 9 aus dem gemähten Erntegut 7 sowie dem vorangehend durch das autonome Gespann 2A erzeugten Schwaden 8 aus. Das als Kreiselschwader ausgeführte Anbaugerät 4B des Gespanns 2B führt hierzu das Erntegut 7 sowie die Schwade 8 zentrierend zu dem Schwad 9 zusammen.

Lediglich beispielhaft ist in Fig. 1 eine selbstfahrende Erntemaschine 10 gezeigt, welche den vom autonomen Gespann 2B erzeugten Schwad 9 mittels eines Vorsatzgerätes aufnimmt und in einen Transportwagen 11 überlädt. Alternativ kann der vom autonomen Gespann 2B erzeugte Schwad 9 von einer Ballenpresse aufgenommen und zu einem Ballen gepresst werden.

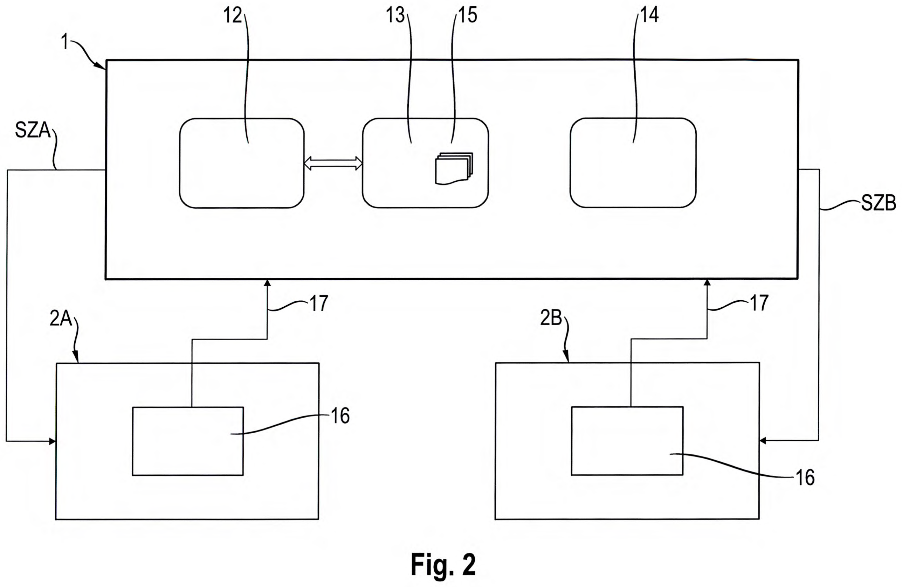

In Fig. 2 ist schematisch und exemplarisch eine Darstellung eines Assistenzsystems 1 zur Ansteuerung des zumindest einen autonomen landwirtschaftlichen Gespanns 2A, 2B gezeigt. Das Assistenzsystem 1 umfasst eine Recheneinheit 12, eine Speichereinheit 13 und eine Kommunikationseinheit 14. In der Speichereinheit 13 ist zumindest ein Objekterkennungs- und Reaktionsalgorithmus 15 hinterlegt oder hinterlegbar. Der zumindest eine Objekterkennungs- und Reaktionsalgorithmus 15 wird durch die Recheneinheit 13 ausgeführt. Das Assistenzsystem 1 steht durch die Kommunikationseinheit 14 mit dem jeweiligen Gespann 2A, 2B zum Datenaustausch in Verbindung. Das Assistenzsystem 1 ist als eine vom jeweiligen Gespann 2A, 2B entfernte, mobile oder stationäre, Datenverarbeitungsvorrichtung ausgeführt.

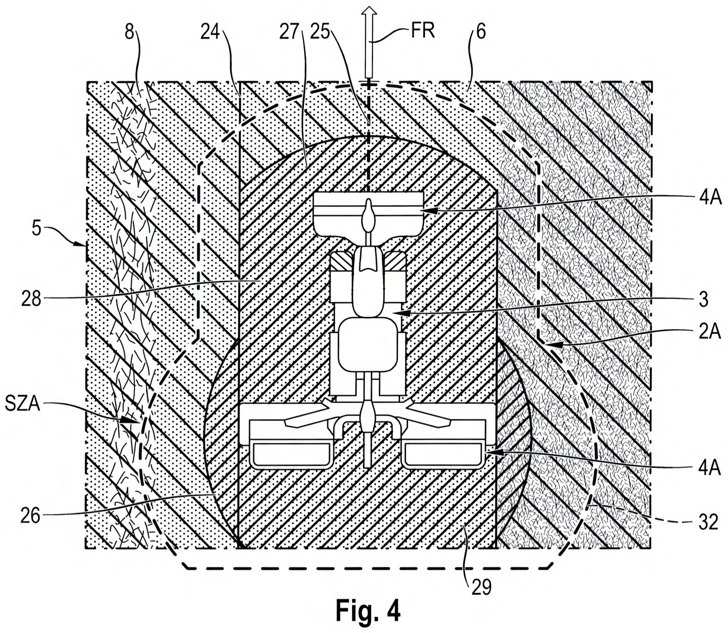

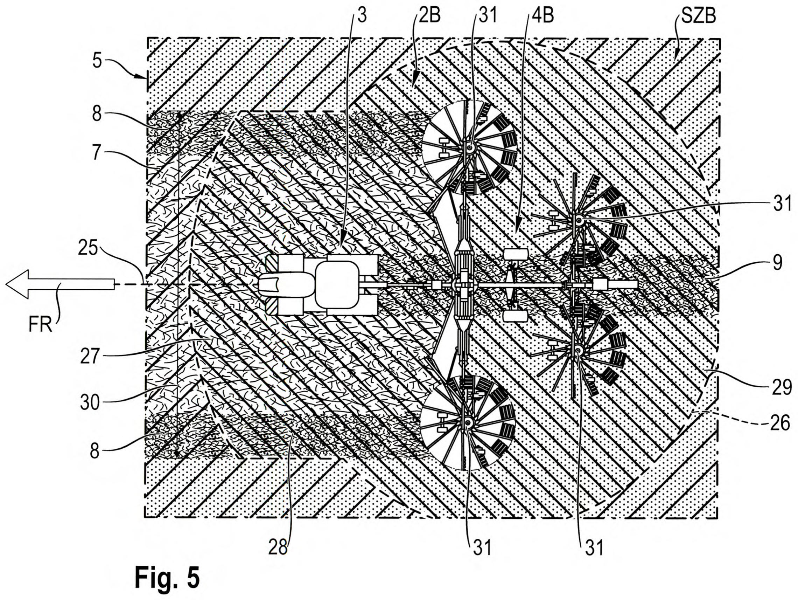

Das jeweilige Gespann 2A, 2B weist zumindest eine Sensoranordnung 16 zur Generierung von Umfelddaten 17 innerhalb einer durch das Assistenzsystem 1 zu definierenden, das jeweilige Gespann 2A, 2B umgebenden Sicherheitszone SZA, SZB auf, wie in den Fig. 4 und 5 beispielhaft dargestellt.

Das Assistenzsystem 1 ist zum Empfang und zur Auswertung der von der zumindest einer Sensoranordnung 16 bereitgestellten Umfelddaten 17 eingerichtet. Die von dem Assistenzsystem 1 für das jeweilige Gespann 2A, 2B generierte Sicherheitszone SZA, SZB wird durch die Kommunikationseinheit 14 an diese übertragen. Die Größe und Form der generierten Sicherheitszone SZA, SZB bestimmt den durch die zumindest eine Sensoranordnung 16 zu überwachenden räumlichen Bereich um das Gespann 2A, 2B.

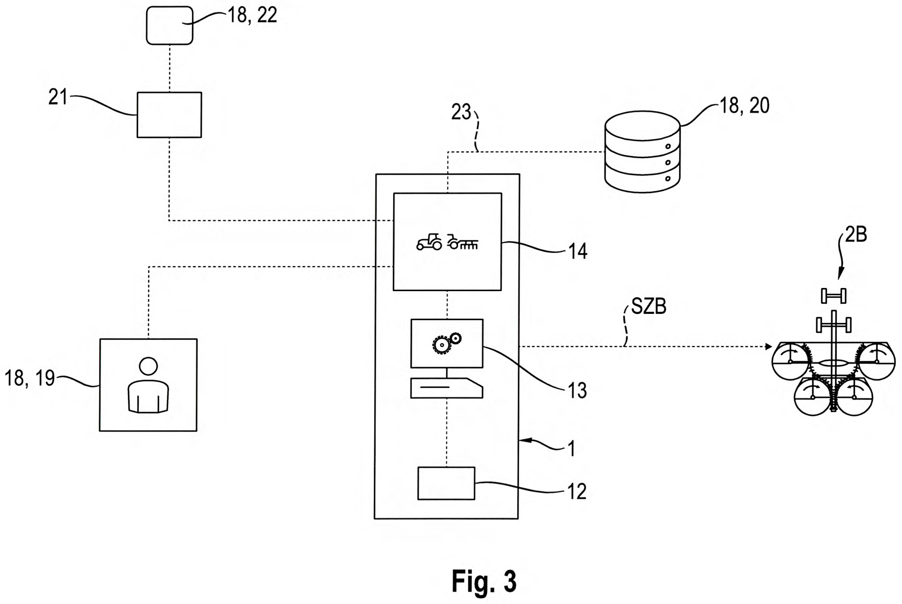

Die Darstellung in Fig. 3 zeigt schematisch und exemplarisch das Assistenzsystem 1, welches von zumindest einer Datenquelle 18 Informationen abruft. Das Assistenzsystem 1 ist dazu ausgeführt und eingerichtet, Informationen zur auszuführenden landwirtschaftlichen Arbeitsaufgabe und/oder zum zumindest einen zur Durchführung der landwirtschaftlichen Arbeitsaufgabe vorgesehenen Anbaugerät 4A, 4B aus einer Datenquelle 18 abzurufen, um in Abhängigkeit von diesen Informationen die Sicherheitszone SZA, SZB dynamisch zu definieren, in welcher das Assistenzsystem 1 bei einer Detektion eines Objektes innerhalb der Sicherheitszone SZA, SZB durch die Auswertung der von der zumindest einen Sensoranordnung 16 bereitgestellten Umfelddaten 17 eine Reaktionsroutine auslöst.

Das Assistenzsystem 1 ist dazu eingerichtet, mittels der Kommunikationseinheit 14 die Informationen zu der durch das autonome Gespann 2A, 2B auszuführenden landwirtschaftlichen Arbeitsaufgabe und/oder Informationen zum zumindest einen zur Durchführung der landwirtschaftlichen Arbeitsaufgabe vorgesehenen Anbaugerät 4A, 4B durch einen interaktiven Dialog mit einer Bedienperson 19 des Assistenzsystems 1 als Datenquelle 18 abzufragen, aus einem Speicher 20 einer entfernten Datenverarbeitungsvorrichtung als Datenquelle 18 abzurufen und/oder bei Adaption des zumindest einen Anbaugerätes 4A, 4B an das autonome Arbeitsfahrzeug 3 durch einen Datenbus 21 von einer Steuereinheit 22 des autonomen Arbeitsfahrzeuges 3 oder des Anbaugerätes 4A, 4B als Datenquelle 18 abzurufen.

Bevorzugt kann das Assistenzsystem 1 dazu eingerichtet sein, aus dem Speicher 20 der entfernten Datenverarbeitungsvorrichtung als Datenquelle 18 feldspezifische Daten 23 über das zu bearbeitenden Feld 5 abzurufen. Die feldspezifischen Daten 23 können Art und Position von bereits kategorisierten Hindernissen auf dem Feld 5 enthalten. Die feldspezifischen Daten 23 können weiterhin auch Fahrtspuren umfassen, die in der Vergangenheit von einem autonomen oder nicht-autonomen Gespann abgefahren wurden.

Bevorzugt kann es sich bei der Datenquelle 18, welche die feldspezifische Daten 23 über das zu bearbeitenden Feld 5 bereitstellt, um ein Farmmanagementsystem handeln, in welchem unter anderem topgrafische Daten des zu bearbeitenden Feldes 5 hinterlegt sind.

Fig. 4 zeigt schematisch und exemplarisch das landwirtschaftliche Gespann 2A gemäß Fig. 1 sowie eine für dieses Gespann 2A individuell generierte Sicherheitszone SZA.

Die Darstellung in Fig. 5 zeigt schematisch und exemplarisch das weitere landwirtschaftliche Gespann 2B gemäß Fig. 1 sowie eine für dieses Gespann 2B individuell generierte Sicherheitszone SZB.

Wie aus den beiden Fig. 4 und 5 exemplarisch ersichtlich, unterscheiden sich die individuell generierten Sicherheitszonen SZA, SZB in ihrer Geometrie und räumlichen Ausdehnung voneinander.

So ist das Assistenzsystem 1 dazu eingerichtet ist, die Definition der Sicherheitszone SZA, SZB in Abhängigkeit von der Anzahl der an das Arbeitsfahrzeug 3 adaptierten Anbaugeräte 4A, 4B, der Art, den Abmessungen des zumindest einen Anbaugerätes 4A, 4B und/oder dem Betriebsbereich in Arbeitsposition des zumindest einen Anbaugerätes 4A, 4B durchzuführen.

Das autonome Gespann 2A umfasst zwei Anbaugeräte 4A, wobei das frontseitige Anbaugerät 4A eine geringere Arbeitsbreite als das heckseitige Anbaugerät 4A aufweist. Die Anbaugeräte 4A des autonomen Gespanns 2A sind im dargestellten Ausführungsbeispiel als Mähwerke ausgeführt. Das autonome Gespann 2A orientiert sich bei der Fahrt über das Feld 5 an einer Bestandskante 24. Dabei fährt das autonome Gespann 2A parallel zur Bestandskante 24 entlang einer Fahrspur 25, die im hier halben Abstand von der Arbeitsbreite des heckseitigen Anbaugerätes 4A verläuft.

Das Assistenzsystem 1 kann dazu eingerichtet sein, die Sicherheitszone SZA in Abhängigkeit von den abgerufenen Informationen in zumindest drei Unterzonen mit variabler Größe, einer inneren Zone 26, wenigstens einer die innere Zone 26 umgebenden Zwischenzone 32 und einer die wenigstens eine Zwischenzone 32 umgebenden äußeren Zone, zu unterteilen. Die Unterteilung in die zumindest drei Unterzonen kann dazu dienen, unabhängig von der Art des detektierten Objektes, d.h. als statisches oder dynamisches Objekt und/oder als lebendes oder nichtlebendes Objekt, die Ausführung einer für die jeweilige Unterzone spezifischen Reaktionsroutine zu priorisieren. Die äußere Kontur der Sicherheitszone SZA bleibt unabhängig von einer Unterteilung in mehrere Unterzonen gleich.

Die Darstellung in Fig. 4 zeigt lediglich die innere Zone 26 sowie strichliniert die Zwischenzone 32, deren jeweilige Geometrie und räumlichen Ausdehnung durch die Anordnung und Position der als Mähwerke ausgeführten Anbaugeräte 4A am Arbeitsfahrzeug 3 und deren unterschiedliche Arbeitsbreiten bestimmt ist. Im Bereich vor dem frontseitigen Anbaugerät 4A erstreckt sich ein im Wesentlichen kreissegmentförmiger oder kuppelförmiger Bereich 27 der inneren Zone 26 in Fahrtrichtung FR. Der im Wesentlichen kreissegmentförmige oder kuppelförmige Bereich 27 weist in Fahrtrichtung FR eine Erstreckung auf, deren Ausdehnung sich aus der Art des Anbaugerätes 4A ergibt. Der Bereich 27 weist quer zur Fahrrichtung FR eine Breite auf, die der größten Arbeitsbreite der an das autonome Arbeitsfahrzeug 3 adaptierten Anbaugeräte 4A entspricht.

An den Bereich 27 schließt sich ein Bereich 28 der inneren Zone 26 an, welcher eine Breite aufweist, die sich ebenfalls an der größten Arbeitsbreite der an das Arbeitsfahrzeug 3 adaptierten Anbaugeräte 4A orientiert. Der Bereich 28 der inneren Zone 26 erstreckt sich ausgehend vom frontseitigen Anbaugerät 4A in Längsrichtung des autonomen Arbeitsfahrzeugs 3 und überlappt dieses abschnittsweise.

An den Bereich 28 schließt sich ein weiterer Bereich 29 der inneren Zone 26 an, welcher das autonome Arbeitsfahrzeug 3 abschnittsweise und das heckseitige Anbaugerät 4A vollständig umgibt. Der Bereich 29 der inneren Zone 26 weist quer zur Fahrtrichtung FR eine im Wesentlichen bauchige Flächenausdehnung auf. Die Breite des Bereiches 29 geht im randseitigen Bereich des heckseitigen Anbaugerätes 4A über dessen Arbeitsbreite hinaus. Die Radien des Bereichs 29 resultieren aus der Arbeitsbreite des heckseitigen Anbaugerätes 4A sowie der Art des Anbaugerätes 4A. Die Ausdehnung in Längsrichtung resultiert aus der Geometrie des heckseitigen Anbaugerätes 4A.

Das Vorsehen einer die innere Zone 26 umgebenden Zwischenzone 32 sowie der äußeren Zone zur Unterteilung der Sicherheitszone SZA in mehrere Unterzonen lässt die durch die innere Zone 26 bestimmte Kontur der Sicherheitszone SZA unbeeinflusst.

Die Art des Anbaugerätes 4A bestimmt, ob das Anbaugerätes 4A statisch oder dynamisch arbeitende Arbeitsorgane aufweist. Die dynamischen Arbeitsorgane des als Mähwerk ausgeführten Anbaugerätes 4A sind rotierende Mähscheiben mit daran angeordneten Messern. Die rotierend angetriebenen Arbeitsorgane des heckseitigen Anbaugerätes 4A können Fremdkörper wie Steine aus dem unmittelbaren Arbeitsbereich des Anbaugerätes 4A hinausbefördern, so dass diese für lebende Objekte zur Gefahr werden können, die sich seitlich vom oder hinter dem Anbaugerät 4A aufhalten. Entsprechend wird die Definition der Sicherheitszone SZA in Abhängigkeit vom Vorhandensein statisch und/oder dynamisch arbeitender Arbeitsorgane des zumindest einen Anbaugerätes 4A durchgeführt, um dieser Gefahr zu begegnen.

Die Struktur der Sicherheitszone SZB um das autonome Gespann 2B entspricht im Wesentlichen der Struktur der anhand von Fig. 4 erläuterten Sicherheitszone SZA. Die Breite des im Wesentlichen kreissegmentförmigen oder kuppelförmigen Bereichs 27 und des sich anschließenden Bereichs 28 der inneren Zone 26 wird im dargestellten Ausführungsbeispiel durch die Breite eines Ablagebereichs 30 von gemähtem Erntegut 7 bestimmt. Die Breite des Ablagebereichs 30 ist seitlich durch die Schwade 8, die durch die vorangehend ausgeführte landwirtschaftliche Arbeitsaufgabe des Mähens erzeugt wurden, begrenzt.

Die Breite des sich an den Bereich 28 anschließenden Bereiches 29 der inneren Zone 26 ist durch die Geometrie und Arbeitsbreite des Anbaugerätes 4B bestimmt. Das als Schwader ausgeführte Anbaugerät 4B weist ebenfalls dynamisch arbeitende Arbeitsorgane auf, hier in Form von rotierend angetriebenen Schwadkreiseln 31. Dadurch vergrößert sich der Bereich 29 der Sicherheitszone SZB über die reine Arbeitsbreite des heckseitigen Anbaugerätes 4B hinaus.

Weiterhin können die Schwadkreisel 31 teleskopierbar ausgeführt sein, was beispielsweise bei einer Kurvenfahrt oder Engstellen vorteilhaft ist. Die daraus resultierende Änderung der Arbeitsbreite des Anbaugerätes 4B führt dazu, dass die Sicherheitszone SZB entsprechend angepasst wird.

Als Beispiel für ein Anbaugerät 4B mit statisch arbeitenden Arbeitsorganen kann ein Pflug genannt werden, sofern dieser keine bewegten Arbeitsorgane bzw. in der Arbeitsbreite veränderliche Arbeitsorgane aufweist, die zur Erfüllung der landwirtschaftlichen Arbeitsaufgabe erforderlich sind. Weitere Beispiele für ein Anbaugerät 4B mit statisch arbeitenden Arbeitsorganen sind eine Sämaschine, ein Grubber oder eine Scheibenegge, welche sich zumindest durch starre Arbeitsbreiten auszeichnen.

Das Assistenzsystem 1 ist dazu eingerichtet, das von der zumindest einen Sensoranordnung 16 detektierte Objekt als statisches oder dynamisches Objekt und/oder als lebendes oder nichtlebendes Objekt einzuordnen. Hierzu wird der zumindest eine in der Speichereinheit 13 hinterlegte oder hinterlegbare Objekterkennungs- und Reaktionsalgorithmus 15 durch die Recheneinheit 12 ausgeführt. Der Objekterkennungs- und Reaktionsalgorithmus 15 ermöglich es, das detektierte Objekt zu identifizieren, zu klassifizieren und darauf zu reagieren.

Der Objekterkennungs- und Reaktionsalgorithmus 15 kann bevorzugt auf künstlicher Intelligenz basieren. Das Assistenzsystem 1 kann hierzu ein Maschinenlernmodell verwenden. Bei dem Maschinenlernmodell kann es sich beispielsweise um ein trainiertes künstliches neuronales Netz handeln. Auch andere trainierbare Architekturen sind gleichermaßen als Maschinenlernmodell vorstellbar. Der Objekterkennungsalgorithmus als ein Teil des Objekterkennungs- und Reaktionsalgorithmus 15 ist dazu eingerichtet, Objekte innerhalb der Sicherheitszone zu erkennen. Der Objekterkennungsalgorithmus umfasst zumindest einen Klassifikationsschritt, um zwischen einem statischen und einem dynamischen Objekt und/oder einem lebenden oder nichtlebenden Objekt zu unterscheiden. Der Objekterkennungsalgorithmus kann durch die Klassifizierung auch die räumliche Dimension eines Objektes bestimmen. Letzteres kann insbesondere bei statischen, nichtlebenden Objekten relevant sein, wenn diese Objekte aufgrund ihrer Größe das Auslösen einer Reaktionsroutine entbehrlich machen.

Der Reaktionsalgorithmus als weiterer Teil des Objekterkennungs- und Reaktionsalgorithmus 15 leitet aus der Klassifizierung entsprechend die auszulösende Reaktionsroutine ab, die eine oder mehrere Maßnahmen als Reaktion auf die Detektion eines Objektes auslöst. Die Maßnahmen der Reaktionsroutinen variieren abhängig von der Art und der Position des Objektes innerhalb der Sicherheitszone SZA, SZB.

Bevorzugt kann die zumindest eine Sensoranordnung 16 mehrere Sensoren umfassen, die an verschiedenen Positionen des autonomen Gespanns 2A, 2B angeordnet sind. Die Anzahl und die Verteilung der zumindest einen Sensoranordnung 16 bzw. der Sensoren der zumindest einen Sensoranordnung 16 auf das autonome Arbeitsfahrzeug 3 und das zumindest eine daran adaptierte Anbaugerät 4A, 4B kann sich bevorzugt an der auszuführenden landwirtschaftlichen Arbeitsaufgabe und/oder dem zumindest einen zur Durchführung der landwirtschaftlichen Arbeitsaufgabe vorgesehenen Anbaugerät 4A, 4B orientieren. In Abhängigkeit von den Informationen wird die Sicherheitszone SZA, SZB individuell definiert, wodurch sich die erforderliche Anzahl, Verteilung und Positionierung der Sensoren an dem autonomen Gespann 2A, 2B ergibt, um die definierte Sicherheitszone SZA, SZB sensorisch zu erfassen und zu überwachen.

Wie weiter oben bereits ausgeführt, ist die individuell definierte Sicherheitszone SZA, SZB während der Durchführung der landwirtschaftlichen Arbeitsaufgabe dynamisch anpassbar, um auf Parameteränderungen oder andere Einflüsse reagieren zu können.

Bevorzugt sind die Sensoren der zumindest eine Sensoranordnung 16 als optische Sensoren, Ultraschallsensoren, RADAR-Sensoren, LIDAR-Sensoren und/oder Thermalsensoren ausgeführt. Bevorzugt kommt eine Kombination mehrerer unterschiedlicher Sensoren zur Anwendung, um unter unterschiedlichen Betriebs- und Witterungsbedingungen die Erfassung der dynamisch veränderbaren Sicherheitszone SZA, SZB zu gewährleisten.

Weiterhin ist die Anordnung der Sensoren am Gespann 2A, 2B derart gewählt, dass sich die Erfassungsbereiche benachbart angeordneter Sensoren abschnittsweise überlappen. Hierdurch lassen sich Bereiche in den Sicherheitszonen SZA, SZB vermeiden, in den ein sogenannter toter Winkel besteht.

Der jeweiligen Unterzone kann eine individuelle Reaktionsroutine zugeordnet sein, wobei die Detektion eines Objekts in der das Gespann 2A, 2B unmittelbar umschließenden inneren Zone 26 eine kritische Betriebssituation bildet, die Detektion eines Objekts in der wenigstens einen Zwischenzone 32 eine Grenzbetriebssituation bildet und die Detektion eines Objektes in der äußeren Zone eine unkritische Betriebssituation bildet.

Entsprechend kann die der jeweiligen Unterzone zugeordnete Reaktionsroutine unterschiedliche, in ihrer Intensität abgestufte Reaktionen zur Ansteuerung des Gespanns 2A, 2B umfasst, mit welcher das Assistenzsystem 1 auf das Auftreten des Objekts in der jeweiligen Unterzone der Sicherheitszone SZA, SZB reagiert.

So kann bei einem in der inneren Zone 26 detektierten Objekt die Reaktionsroutine das sofortige Unterbrechen einer Fahrbewegung des autonomen Gespanns 2A, 2B umfassen. Zusätzlich kann die Reaktionsroutine das Abschalten des Antriebs oder die Unterbrechung des Antriebsstranges für das zumindest eine adaptierte Anbaugerät 4A, 4B umfassen.

Bei der Detektion eines Objektes in der wenigstens einen Zwischenzone 32, welche zu einer Grenzbetriebssituation führt, ist die Differenzierung der Art des detektierten Objektes eine wesentliche Prämisse für die auszulösende Reaktionsroutine. So kann die Reaktionsroutine beispielsweise eine Reduzierung der Fahrgeschwindigkeit des autonomen Gespanns 2A, 2B, eine partielle Anpassung der Fahrspur, um das Objekt zu umfahren, und/oder das Auslösen von akustischen und/oder optischen Warnhinweisen umfassen.

Hingegen kann die Detektion eines Objektes in der äußeren Zone, welche eine unkritische Betriebssituation bildet, eine Reaktionsroutine auslösen, welche den Betriebsablauf des autonomen Gespanns 2A, 2B unbeeinflusst lässt, jedoch das Ereignis als solches sowie die Art und die Position des detektierten Objekts aufzeichnet.

Des Weiteren ist das Assistenzsystem 1 dazu eingerichtet, das Entfernen des detektierten Objektes aus der Sicherheitszone SZA, SZB durch die Auswertung der Umfelddaten 17 zu bestimmen und die Durchführung der landwirtschaftlichen Arbeitsaufgabe mit vor der Auslösung der Reaktionsroutine gültigen Betriebsparametern fortzuführen.

**Bezugszeichenliste**

| | | | |
|---|---|---|---|
| 1 | Assistenzsystem | 31 | Schwadkreisel |
| 2A | Gespann | 32 | Zwischenzone |
| 2B | Gespann | | |
| 3 | Arbeitsfahrzeug | FR | Fahrtrichtung |
| 4A | Anbaugerät | SZA | Sicherheitszone |
| 4B | Anbaugerät | SZB | Sicherheitszone |
| 5 | Feld | | |
| 6 | Erntegut | | |
| 7 | Gemähtes Erntegut | | |
| 8 | Schwad | | |
| 9 | Schwad | | |
| 10 | Erntemaschine | | |
| 11 | Transportwagen | | |
| 12 | Recheneinheit | | |
| 13 | Speichereinheit | | |
| 14 | Kommunikationseinheit | | |
| 15 | Objekterkennungs- und Reaktionsalgorithmus | | |
| 16 | Sensoranordnung | | |
| 17 | Umfelddaten | | |
| 18 | Datenquelle | | |
| 19 | Bedienperson | | |
| 20 | Speicher | | |
| 21 | Datenbus | | |
| 22 | Steuereinheit | | |
| 23 | Feldspezifische Daten | | |
| 24 | Bestandskante | | |
| 25 | Fahrspur | | |
| 26 | Innere Zone | | |
| 27 | Bereich | | |
| 28 | Bereich | | |
| 29 | Bereich | | |
| 30 | Ablagebereich | | |

## Patentansprüche

1. Assistenzsystem (1) zur Ansteuerung eines autonomen landwirtschaftlichen Gespanns (2A, 2B) mit einem autonomen Arbeitsfahrzeug (3) und zumindest einem daran adaptierten Anbaugerät (4) zur Durchführung einer landwirtschaftlichen Arbeitsaufgabe, wobei das Gespann (2A, 2B) zumindest eine Sensoranordnung (16) zur Generierung von Umfelddaten (17) innerhalb einer durch das Assistenzsystem (1) zu definierenden, das Gespann (2A, 2B) umgebenden Sicherheitszone (SZA, SZB) umfasst, wobei das Assistenzsystem (1) zum Empfang und zur Auswertung der von der zumindest einer Sensoranordnung (16) bereitgestellten Umfelddaten (17) eingerichtet ist, **dadurch gekennzeichnet, dass** das Assistenzsystem (1) dazu ausgeführt und eingerichtet ist, Informationen zur auszuführenden landwirtschaftlichen Arbeitsaufgabe und/oder Informationen zum zumindest einen zur Durchführung der landwirtschaftlichen Arbeitsaufgabe vorgesehenen Anbaugerät (4) aus zumindest einer Datenquelle (18) abzurufen, um in Abhängigkeit von diesen Informationen die Sicherheitszone (SZA, SZB) individuell zu definieren, innerhalb welcher das Assistenzsystem (1) bei einer Detektion eines Objektes durch die Auswertung der Umfelddaten (17) eine Reaktionsroutine auslöst.

2. Assistenzsystem (1) nach Anspruch 1, **dadurch gekennzeichnet, dass** das Assistenzsystem (1) dazu eingerichtet ist, das detektierte Objekt als statisches oder dynamisches Objekt und/oder als lebendes oder nichtlebendes Objekt einzuordnen.

3. Assistenzsystem (1) nach Anspruch 1 oder 2, **dadurch gekennzeichnet, dass** das Assistenzsystem (1) zur Hinterlegung und zur Durchführung von wenigstens einem Objekterkennungs- und Reaktionsalgorithmus (15) eingerichtet ist, um das detektierte Objekt zu identifizieren, zu klassifizieren und darauf zu reagieren.

4. Assistenzsystem (1) nach einem der vorangehenden Ansprüche, **dadurch gekennzeichnet, dass** das Assistenzsystem (1) dazu eingerichtet ist, die Sicherheitszone (SZA, SZB) in Abhängigkeit von den Informationen in zumindest drei Unterzonen mit variabler Größe, einer inneren Zone (26), wenigstens einer die innere Zone umgebenden Zwischenzone (32) und einer die wenigstens eine Zwischenzone (32) umgebenden äußeren Zone, zu unterteilen.

5. Assistenzsystem (1) nach Anspruch 4, **dadurch gekennzeichnet, dass** der jeweiligen Unterzone eine individuelle Reaktionsroutine zugeordnet ist, wobei die Detektion eines Objekts in der das Gespann (2A, 2B) unmittelbar umschließenden inneren Zone (26) eine kritische Betriebssituation bildet, die Detektion eines Objekts in der wenigstens einen Zwischenzone (32) eine Grenzbetriebssituation bildet und die Detektion eines Objektes in der äußeren Zone eine unkritische Betriebssituation bildet.

6. Assistenzsystem (1) nach Anspruch 5, **dadurch gekennzeichnet, dass** die der jeweiligen Unterzone zugeordnete Reaktionsroutine unterschiedliche, in ihrer Intensität abgestufte Reaktionen zur Ansteuerung des Gespanns (2A, 2B) umfasst, mit welcher das Assistenzsystem (1) auf das Auftreten des Objekts in der jeweiligen Unterzone der Sicherheitszone (SZA, SZB) reagiert.

7. Assistenzsystem (1) nach einem der vorangehenden Ansprüche, **dadurch gekennzeichnet, dass** das Assistenzsystem (1) dazu eingerichtet ist, mittels einer Kommunikationseinheit (14) die Informationen durch einen interaktiven Dialog mit einer Bedienperson (19) des Assistenzsystems (1) als Datenquelle (18) abzufragen, aus einem Speicher (20) einer entfernten Datenverarbeitungsvorrichtung als Datenquelle (18) abzurufen und/oder bei Adaption des zumindest einen Anbaugerätes (4A, 4B) an das Arbeitsfahrzeug (3) durch einen Datenbus (21) von einer Steuereinheit (22) des autonomen Arbeitsfahrzeuges (3) oder des Anbaugerätes (4A, 4B) als Datenquelle (18) abzurufen.

8. Assistenzsystem (1) nach einem der vorangehenden Ansprüche, **dadurch gekennzeichnet, dass** das Assistenzsystem (1) dazu eingerichtet ist, die Definition der Sicherheitszone (SZA, SZB) in Abhängigkeit von der Anzahl der an das Arbeitsfahrzeug (3) adaptierten Anbaugeräte (4A,4B), der Art des zumindest einen Anbaugerätes (4A, 4B), den Abmessungen des zumindest einen Anbaugerätes (4A, 4B) und/oder dem Betriebsbereich in Arbeitsposition des zumindest einen Anbaugerätes (4A, 4B) durchzuführen.

9. Assistenzsystem (1) nach Anspruch 8, **dadurch gekennzeichnet, dass** das Assistenzsystem (1) dazu eingerichtet ist, die Form der Sicherheitszone (SZA, SZB) in Abhängigkeit von der Einnahme der Arbeitsposition oder einer Transportposition des zumindest einen Anbaugerätes (4A, 4B) zu verändern,

10. Assistenzsystem (1) nach einem der vorangehenden Ansprüche, **dadurch gekennzeichnet, dass** das Assistenzsystem (1) dazu eingerichtet ist, die Definition der Sicherheitszone (SZA, SZB) in Abhängigkeit vom Vorhandensein statisch oder dynamisch arbeitender Arbeitsorgane des zumindest einen Anbaugerätes (4A, 4B) durchzuführen.

11. Assistenzsystem (1) nach einem der vorangehenden Ansprüche, **dadurch gekennzeichnet, dass** das Assistenzsystem (1) dazu eingerichtet ist, das Entfernen des detektierten Objektes aus der Sicherheitszone (SZA, SZB) zu bestimmen und die Durchführung der landwirtschaftlichen Arbeitsaufgabe mit vor der Auslösung der Reaktionsroutine gültigen Betriebsparametern fortzuführen.

12. Assistenzsystem (1) nach einem der vorangehenden Ansprüche, **dadurch gekennzeichnet, dass** die zumindest eine Sensoranordnung (16) mehrere Sensoren umfasst, die an verschiedenen Positionen des Gespanns (2A, 2B) angeordnet sind.

13. Assistenzsystem (1) nach Anspruch 12, **dadurch gekennzeichnet, dass** die Sensoren der zumindest eine Sensoranordnung (16) als optische Sensoren, Ultraschallsensoren, RADAR-Sensoren, LIDAR-Sensoren und/oder Thermalsensoren ausgeführt sind.

14. Assistenzsystem (1) nach Anspruch 12 oder 13, **dadurch gekennzeichnet, dass** die Anordnung der Sensoren am Gespann (2A, 2B) derart gewählt ist, dass sich die Erfassungsbereiche benachbart angeordneter Sensoren abschnittsweise überlappen.

15. Autonomes Gespann (2A, 2B) mit einem autonomen Arbeitsfahrzeug (3) und zumindest einem daran adaptierten Anbaugerät (4A, 4B) zur Durchführung einer landwirtschaftlichen Arbeitsaufgabe, wobei das Gespann (2A, 2B) zumindest eine Sensoranordnung (1) zur Generierung von Umfelddaten (17) innerhalb einer das Gespann (2A, 2B) umgebenden Sicherheitszone (SZA, SZB) umfasst, wobei dem Gespann (2A, 2B) ein Assistenzsystem (1) zugeordnet ist, welches zur Definition der Sicherheitszone (SZA, SZB) eingerichtet und ausgeführt ist, **dadurch gekennzeichnet, dass** das Assistenzsystem (1) nach einem der vorangehenden Anspruch 1 bis 14 ausgebildet ist.
